(19) Europäisches Patentamt
European Patent Office
Office européen des brevets

(11) **EP 1 860 131 A1**

(12) **EUROPÄISCHE PATENTANMELDUNG**

(43) Veröffentlichungstag:
**28.11.2007 Patentblatt 2007/48**

(51) Int Cl.:
***C08G 18/10*** *(2006.01)*    ***C08G 18/22*** *(2006.01)*
***C09J 175/04*** *(2006.01)*

(21) Anmeldenummer: **06114497.8**

(22) Anmeldetag: **24.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Sika Technology AG**
**6340 Baar (CH)**

(72) Erfinder:
- **Schlumpf, Michael**
  **8953, Dietikon (CH)**
- **Konstanzer, Martin**
  **8048, Zürich (CH)**

(54) **Katalysierungssystem**

(57) Die vorliegende Erfindung betrifft eine zweikomponentige Klebstoff- oder Dichtstoffzusammensetzung, welche aus einer ersten Komponente **K1** umfassend ein Isocyanat-Gruppen aufweisendes Prepolymer **P** und einer Beschleunigerkomponente **K2**, besteht. Die Beschleunigerkomponente **K2** weist einen Katalysator auf, welcher die Reaktion von Isocyanatgruppen katalysiert und welcher ein Blei- Zink oder Eisen(III)komplex ist sowie maximal 1 Gew.-% an Isocyanat-reaktive Gruppen aufweisenden Verbindungen auf.

Es lassen sich insbesondere Klebstoffe mit hoher Aushärtungsgeschwindigkeit und guter Haftung erzielen und auf einfache Art und Weise den Umgebungsbedingungen anpassen.

**EP 1 860 131 A1**

**Beschreibung**

**Technisches Gebiet**

Das Gebiet der vorliegenden Erfindung betrifft das Gebiet der Polyurethankleb- und Dichtstoffe.

**Stand der Technik**

Polyurethandicht- und Klebstoffe sind seit langem bekannt und werden breit eingesetzt. Klassisch wird in der Fachwelt zwischen einkomponentigen und zweikomponentigen Polyurethanklebstoffen unterschieden. Einkomponentige Polyurethanklebstoffe reagieren unter dem Einfluss von Luftfeuchtigkeit aus. Bekannte zweikomponentige Polyurethanklebstoffe enthalten als zweite Komponenten eine Härterkomponente, welche im Wesentlichen Polyamine und/ oder Polyole enthalten. In beiden Fällen werden Isocyanatgruppenhaltige Verbindungen oder Prepolymere eingesetzt. Um die Vernetzung zu beschleunigen, werden in beiden Typen Katalysatoren den Isocyanatgruppenhaltige Verbindungen respektive Prepolymere beigesetzt. Beispielsweise offenbart EP-B-0 737 699 Amin-, Zinn- oder Quecksilberkatalysatoren zur Beschleunigung von feuchtigkeitsvernetzenden Polyurethankleb- und Dichtstoffe.

Als klassische Katalysatoren für einkomponentige Polyurethanklebstoffe gelten insbesondere Amin-Katalysatoren und Organozinnkatalysatoren, insbeondere Dibutylzinndilaurat.

Für die oben erwähnten zweikomponentigen sind neben den erwähnten Amin und Organozinn-Katalysatoren auch andere Metallkatalysatoren bekannt.

Nachteilig an den einkomponentigen Polyurethanklebstoffen ist, dass sie sehr langsam, typischerweise während Tagen, aushärten. Schnelle Aushärtung ist jedoch ein grosses Bedürfnis in der Klebstoffindustrie, insbesondere in der Automobilindustrie. Um eine schnelle Reaktion zu erlangen, werden deshalb vielfach klassische zweikomponentige Polyurethanklebstoffe mit einer Isocyanatkomponente und einer Härterkomponente eingesetzt. Die zweikomponentigen Polyurethanklebstoffe weisen jedoch den grossen Nachteil auf, dass das hohe Anforderungen an die Mischqualität gestellt werden müssen, da bereits kleine Mischfehler zu starken Abfall der mechanischen Werten führen können.

Sowohl ein- als auch zweikomponentige Polyurethanklebstoffe weisen vielfach Haftprobleme auf Lackuntergründen, insbesondere auf Automobildecklacken, auf.

**Darstellung der Erfindung**

Aufgabe der vorliegenden Erfindung ist es daher, eine Polyurethanzusammensetzung zur Verfügung zu stellen, die schnell aushärtet, unempfindlich gegenüber Mischungsfehlern ist, sowie eine gute Haftung auf lackierten Untergründen, insbesondere auf Automobildecklacken, aufweist.

Überraschenderweise wurde gefunden, dass eine zweikomponentige Kleb- oder Dichtstoffzusammensetzung gemäss Anspruch 1 dieses Problem löst. Ein grosser Vorteil einer derartigen Zusammensetzung ist, dass die Beschleunigerkomponente jedem beliebigen einkomponentigen Polyurethanklebstoff als erster Komponente zugegeben werden kann und dass deren Aushärtung stark beschleunigt wird, ohne dass die bei zweikomponentigen Klebstoffen übliche Problematik der Mischgenauigkeit auftritt. Des Weiteren hat sich gezeigt, dass diese zweikomponentigen Polyurethanzusammensetzungen über ein sehr gutes Haftverhalten auf lackierten Untergründen, insbesondere auf Automobildecklacken verfügen. Schliesslich ermöglicht es die vorliegende Erfindung auf einfache Art und Weise die Aushärtung für Winter- und Sommer-Klimabedingungen einzustellen mit dem Ziel gute Aushärtung und Haftung zu kombinieren.

**Wege zur Ausführung der Erfindung**

Die vorliegende Erfindung betrifft einerseits eine zweikomponentige Klebstoff- oder Dichtstoffzusammensetzung, welche aus einer ersten Komponente **K1** und einer Beschleunigerkomponente **K2,** besteht.

Die erste Komponente **K1** enthält mindestens ein Isocyanat-Gruppen aufweisendes Prepolymer **P,** welches aus mindestens einem Polyisocyanat und mindestens einem Polyol hergestellt ist.

Die Beschleunigerkomponente **K2** weist einen Gehalt von maximal 1 Gew.-%, insbesondere maximal 0.1 Gew.-%, bezogen auf das Gewicht der Beschleunigerkomponente **K2,** an Isocyanat-reaktive Gruppen aufweisenden Verbindungen auf. Es sind somit lediglich Spuren dieser Verbindungen in der Zusammensetzung vorhanden. Ist der Gehalt grösser, steigen entweder die Anforderungen an die Güte der Vermischung oder die Beschleunigerkomponente **K2** ist nicht lagerstabil über längere Zeit.

Als "Isocyanat-reaktive Gruppen aufweisenden Verbindungen" sind Verbindungen zu betrachten, welche bei Raumtemperatur mit Isocyanatgruppen reagieren, insbesondere Verbindungen, welche freie primäre oder sekundäre Aminogruppen, Mercaptogruppen oder Hydroxylgruppen aufweisen, oder Wasser.

Bevorzugt enthält die Beschleunigerkomponente **K2** keine Verbindungen mit Isocyanat-reaktive Gruppen und ist insbesondere frei von Wasser, frei von Polyaminen, frei an Polymercaptanen und frei von Polyolen.

Die Vorsilbe "Poly" in Substanzbezeichnungen, wie "Polyol", "Polyamin", "Polymercaptan" oder "Polyisocyanat" weitere weist im vorliegenden Dokument darauf hin, dass die jeweilige Substanz formal mehr als eine der in ihrer Bezeichnung vorkommenden funktionellen Gruppe pro Molekül enthält.

Die erste Komponente **K1** enthält mindestens ein Isocyanat-Gruppen aufweisendes Prepolymer **P,** welches aus mindestens einem Polyisocyanat und mindestens einem Polyol hergestellt ist. Eine derartige Herstellung kann dadurch erfolgen, dass das Polyol und das Polyisocyanat mit üblichen Verfahren, beispielsweise bei Temperaturen von 50 ˚C bis 100 ˚C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanprepolymer nach der Umsetzung aller Hydroxylgruppen des Polyols ein Gehalt an freien Isocyanatgruppen von 0.1 - 5 Gewichts-%, bevorzugt 0.25 - 2.5 Gewichts-%, besonders bevorzugt 0.3 - 1 Gewichts-%, bezogen auf das gesamte Polymer, verbleibt.

Gegebenenfalls kann das Polyurethanpolymer P unter Mitverwendung von Weichmachern hergestellt werden, wobei die verwendeten Weichmacher keine gegenüber Isocyanaten reaktive Gruppen enthalten.

Bevorzugt sind Polyurethanprepolymere mit dem genannten Gehalt an freien Isocyanatgruppen, welche aus der Umsetzung von Diisocyanaten mit hochmolekularen Diolen in einem NCO/OH-Verhältnis von 1.5/1 bis 2/1 erhalten werden.

Als Polyole für die Herstellung eines Isocyanat-Gruppen aufweisenden Prepolymers **P** können beispielsweise die folgenden handelsüblichen Polyole, oder beliebige Mischungen davon, eingesetzt werden:

- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol und Polyethylenglykole, die isomeren Dipropylenglykole, Tripropylenglykole und Polypropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
  Besonders geeignet sind Polyoxyalkylendiole oder Polyoxyalkylentriole, insbesondere Polyoxypropylendiole oder Polyoxypropylentriole.
  Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Der Begriff "Molekulargewicht" bezeichnet im vorliegenden Dokument das Molekulargewichtsmittel $M_n$.
  Ebenfalls besonders geeignet sind sogenannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden.

- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar® CTBN von Noveon) hergestellt werden können.

Diese genannten Polyole weisen ein mittleres Molekulargewicht von 250 - 30'000 g/mol, insbesondere von 1'000 - 30'000 g/mol, und eine mittlere OH-Funktionalität im Bereich von 1.6 bis 3 auf.

Als Polyole bevorzugt sind Polyoxyalkylenpolyole. Als Polyole weiterhin bevorzugt sind Diole. Besonders bevorzugt sind Polyoxyalkylendiole, insbesondere solche mit einem Ungesättigtheitsgrad tiefer als 0.02 mEq/g und einem Molekulargewicht im Bereich von 4'000 - 30'000 g/mol, insbesondere 8'000 - 30'000 g/mol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung eines Isocyanat-Gruppen aufweisenden Prepolymers P können beispielsweise die folgenden handelsüblichen Polyisocyanate verwendet werden:

1,6-Hexamethylendiisocyanat (HDI), 2-Methylpentamethylen-1,5-diisocyanat, 2,2,4- und 2,4,4-Trimethyl-1,6-hexamethylendüsocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Bei der Herstellung und Lagerung des Isocyanat-Gruppen aufweisenden Prepolymers P sollte darauf geachtet werden, dass möglichst jeder Kontakt mit Wasser bzw. Feuchtigkeit ausgeschlossen wird. Deshalb erfolgt die Herstellung und Lagerung unter Stickstoff und in Dichten Apparaturen bzw. Gebinden.

Die Beschleunigerkomponente K2 enthält mindestens einen Katalysator C, welcher die Reaktion von Isocyanat-Gruppen katalysiert. Dieser Katalysator C ist ein Bleikomplex oder ein Zinkkomplex oder ein Eisen(III)komplex.

Als "Bleikomplex" oder "Zinkkomplex" oder "Eisen(III)komplex" werden Koordinationsverbindungen aus Blei oder Zink oder Eisen (III) als Zentralatom und Liganden, welche koordinativ an Blei oder Zink oder Eisen (III) gebunden sind, verstanden. Die Liganden können organischer oder anorganischer Natur sein. Je nach Art und Ladung der jeweiligen Liganden ist der Komplex ein neutraler Komplex oder ein Komplexanion oder -kation. Als besonders geeignet haben sich Blei- und Zink- und Eisen(III)-Komplexe, welche über Sauerstoff-Atome an das Blei, Zink oder Eisen(III) gebundene organische Liganden enthalten. Besonders bevorzugt enthalten die organischen Liganden mindestens 2 Sauerstoffatome. Als besonders geeignete derartige Liganden haben sich organische Carboxylate erwiesen.

Als besonders geeignet haben sich tetravalente Zink- oder Bleikomplexe oder hexavalente Eisen(III)komplexe. Als meist bevorzugte Zink- und Bleikomplexe gelten sogenannte Metallseifen von Zink oder Blei, welche Zink- oder Blei-Komplexe von Fettsäurecarboxylaten oder Naphthenaten darstellen. Bei Eisen(III) sind neben den Metallseifen die meist bevorzugten Komplexe die Acetylacetonato-Eisen(III)komplexe.

Beispiele für besonders geeignete Zinkkomplexe sind Zinkoctoat, Zinkneodecanoat, Zink 2-ethylhexanoat oder Zinknaphthenat.

Beispiele für besonders geeignete Bleikomplexe sind Bleioctoat, Bleineodecanoat oder Blei 2-ethylhexanoat.

Beispiele für besonders geeignete Eisen(III)komplexe sind Eisen(III)octoat, Eisen(III)neodecanoat oder Eisen(III)acetylacetonat.

Derartige Zink- und Blei- und Eisen(III)komplexe sind beispielsweise bei ABCR GmbH & Co (Deutschland), Alfa Aersar GmBH &Co (Deutschland), Shepherd Chemical Company (USA) oder Gelest Inc. (USA) kommerziell erhältlich.

Es kann durchaus von Vorteil sein Blei- und/oder Zink- und/oder Eisen(III)-Komplexe miteinander gemischt zu verwendet. Zudem kann es auch unter bestimmten Voraussetzungen vorteilhaft sein Blei- und/oder Zink- und/oder Eisen(III)-Komplexe mit Aminkomplexen gemischt zu verwenden.

Die Beschleunigerkomponente **K2** enthält bevorzugt weiterhin ein flüssiges Trägermittel, insbesondere ein Weichmacher oder Lösungsmittel. In einer weiteren bevorzugten Ausführungsform enthält die Beschleunigerkomponente **K2** zusätzlich Thixotropiermittel. Ein derartiges Thixotropiermittel kann anorganischer Natur, wie pyrogene Kieselsäure, zum Beispiel kommerziell erhältlich als Aerosil® von Degussa AG (Deutschland), oder organsicher natur wie Beispielsweise Harnstoffbasierende Thixotropiermittel. Ein bevorzugtes organisches Thixotropiermittel ist ein Thixotropiermittel auf Harnstoffbasis in einem Trägermittel. Geeignete Harnstoffderivate in einem Trägermittel sind insbesondere Umsetzungsprodukte eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylendiisocyanat (MDI) mit Butylamin erwiesen.

Das Harnstoffderivat ist in einem Trägermaterial vorhanden. Das Trägermaterial kann ein Weichmacher, insbesondere ein Phthalat oder ein Adipat sei, vorzugsweise ein Diisodecylphthalat (DIDP) oder Dioctyladipat (DOA). Das Trägermittel kann auch ein blockiertes Polyurethanprepolymer sein. Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit Caprolactam.

Die Verwendung von Weichmacher und/oder Thixotropiermittel in der Beschleunigerkomponente **K2** ist besonders vorteilhaft, wenn die Komponente **K1** pastös ist, denn dann kann das Dosieren und/oder Einmischen einfacher erfolgen.

Die Komponenten **K1** und **K2** können zudem weitere Bestandteile aufweisen. Um eine Lagerstabilität der zwei Komponenten vor der Mischung derselben zu gewährleisten, ist es jedoch wichtig, dass unter Ausschluss von Feuchtigkeit derartige zusätzliche Bestandteile in den Komponenten nicht mit anderen Bestandteilen derselben Komponente reagieren. Somit dürfen die zusätzlichen Bestandteile der Komponente **K1** nicht mit dem Isocyanat-Gruppen aufweisendes Prepolymer **P** reagieren, während die zusätzlichen Bestandteile der Beschleunigerkomponente **K2** nicht mit dem Katalysator **C** reagieren.

Beispiele für mögliche derartige zusätzliche Bestandteile der Komponenten **K1** und **K2** sind

- Weichmacher, beispielsweise Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene;
- Lösemittel;
- anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, insbesondere industriell hergestellte Russe (im Folgenden als "Russ" bezeichnet), Kaoline, Aluminiumoxide, Kieselsäuren, insbesondere hochdisperse Kieselsäuren aus Pyrolyseprozessen, PVC-Pulver oder Hohlkugeln. Bevorzugte Füllstoffe sind Russ, Calciumcarbonate, insbesondere feinteilige beschichtete Calciumcarbonate, hochdisperse Kieselsäuren aus Pyrolyseprozessen, sowie Kombinationen aus diesen Füllstoffen.
- Fasern, beispielsweise aus Polyethylen;
- Pigmente; beispielsweise Titandioxid;
- Polyaldimine, insbesondere wie sie in WO 2004/013088 beschrieben sind
- Katalysatoren, beispielsweise Metallkatalysatoren in Form von Organozinnverbindungen wie Dibutylzinndilaurat und Dibutylzinndiacetylacetonat, Bismut-organische Verbindungen oder Bismut-Komplexe; Aminogruppenhaltige Verbindungen, beispielsweise 1,4-Diazabicyclo[2.2.2]-octan und 2,2'-Dimorpholinodiethylether;
- Rheologie-Modifizierer, wie beispielsweise Verdickungsmittel, zum Beispiel Harnstoffverbindungen, Polyamidwachse, Bentonite oder pyrogene Kieselsäuren;
- Haftvermittler, beispielsweise Epoxysilane, (Meth)acrylsilane, Anhydridosilane oder Addukte der vorgenannten Silane mit primären Aminosilanen, sowie Harnstoffsilane;
- Trocknungsmittel, zum Beispiel Vinyltrimethoxysilan, $\alpha$-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe;
- Stabilisatoren gegen Wärme, Licht- und UV-Strahlung;
- flammhemmende Substanzen;

- oberflächenaktive Substanzen, wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;

sowie weitere üblicherweise in feuchtigkeitshärtenden Zusammensetzungen eingesetzte Substanzen.

Insbesondere sollten diese zusätzlichen Bestandteile bevorzugt kein oder höchstens Spuren von Wasser enthalten. Es kann deshalb sinnvoll sein, gewisse Bestandteile vor dem Einmischen in die Komponenten chemisch oder physikalisch zu trocknen.

Als besonders günstig hat sich erwiesen, wenn die Komponente **K1** und gegebenenfalls die Komponente **K2** Füllstoff, insbesondere Russ enthält. Als besonders vorteilhaft haben sich Komponenten **K1** erwiesen, welche einen Anteil von Füllstoff, bevorzugt Russ, von 5 bis 35 Gew.-%, insbesondere von 10 bis 20 Gew.-%, aufweisen.

Die Dosierung des Katalysators **C** in der Beschleunigerkomponente **K2** ist vorzugsweise derart, dass der Katalysator **C** in einer Menge von 0.01 - 0.3 Gew.-%, insbesondere 0.04 - 0.1 Gew.-%, an Metall, d.h. an Blei, Zink oder Eisen(III), bezogen auf das Gewicht der Klebstoff- oder Dichtstoffzusammensetzung, vorhanden ist.

Bevorzugt ist die Komponente **K1** pastös und standfest. Die Beschleunigerkomponente **K1** ist ebenfalls bevorzugt pastös.

Beide Komponenten **K1** und **K2** sind getrennt von einander lagerstabil, das heisst, sie können, insbesondere unter Ausschluss von Feuchtigkeit, in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Die Komponenten **K1** und **K2** sind in der zweikomponentigen Zusammensetzung bevorzugt so formuliert, dass das Volumenverhältnis der ersten Komponente **K1** zur Beschleunigerkomponente **K2** einen Wert von 100 : 1 bis 1 : 1, insbesondere 100 : 1 bis 10 : 1, bevorzugt 100 : 1 bis 20:1, beträgt.

Durch die Variation der Menge des Katalysators **C,** welche zu einer bestehenden ersten Komponente **K1,** welche beispielsweise ein feuchtigkeitshärtender einkomponentiger Polyurethanklebstoff, wie er unter der Produktereihennamen Sikaflex® von Sika Schweiz AG kommerziell vertrieben wird, beigemischt wird, lassen sich auf elegante Art und Weise Kleb- und Dichtstoffe erreichen, welche optimal auf die jeweils herrschenden Umgebungsklimabedingungen, insbesondere auf die Temperatur und die relative Luftfeuchtigkeit, einstellen, um zu gewährleisten, dass die Aushärtungsgeschwindigkeit und Haftung den Anforderungen entsprechen.

So lassen sich einerseits beispielsweise unterschiedliche Beschleunigerkomponenten **K2**, zum Beispiel eine Sommer- und eine Winter-Beschleunigerkomponente **K2**, bilden, welche sich voneinander in der Konzentration des Katalysators **C** unterscheiden, zu einer bestehenden Komponente **K1** in einem fixierten Mischungsverhältnis **K1/K2** beimischen.

Oder es lassen sich andererseits von einer Beschleunigerkomponente **K2** mit gegebener Konzentration an Katalysator **C**, unterschiedliche Mengen zu einer bestehenden Komponente **K1,** d.h. unter Variation des Mischungsverhältnis **K1/K2**, beimischen.

In beiden Fällen resultiert für dieselbe Komponente **K1** sowohl im den Winter als im Sommer eine Haftung und Aushärtungsgeschwindigkeit, welche den Anforderungen entsprechen. Dieser Aspekt der Erfindung erlaubt es, zu vermeiden, dass von Klebstoffen jeweils eine Winter und eine Sommerversion hergestellt werden muss. Dies bedeutet, dass grössere Mengen von einem einzigen Klebstoff hergestellt werden können und lediglich separat Beschleunigerkomponenten hergestellt werden müssen, welche optimalerweise natürlich für verschiedene Klebstoffe eingesetzt werden können. Die Verwendung dieses modularen Klebstoff/Beschleuniger-Konzepts ist somit von grossem finanziellem Vorteil und ist nur möglich dank der Tatsche, dass dieses System sehr tolerant auf Fehler in der Dosierung und Mischgüte ist.

Bei der Applikation der Klebstoff- oder Dichtstoffzusammensetzung wird ein Verfahren verwendet, welches die folgenden Schritte umfasst:

(i) Mischen der zwei Komponenten **K1** und **K2** einer der vorgängig beschriebenen Kleb- oder Dichtstoffzusammensetzung;
(ii) Applizieren der nach Schritt (i) gemischten Komponenten auf eine Fügeteiloberfläche **S1;**
(iii) Kontaktieren der nach Schritt (i) gemischten Komponenten mit einer zweiten Fügeteiloberfläche **S2;**
(iv) Aushärten der gemischten Komponenten unter dem Einfluss von Wasser, insbesondere in Form von Luftfeuchtigkeit.

Das Mischen der zwei Komponenten erfolgt vorzugsweise durch ein Verfahren zur Mischung einer vorgängig beschriebenen zweikomponentigen Klebstoff- oder Dichtstoffzusammensetzung, bei welchem die Beschleunigerkomponente **K2** der Komponente **K1** unmittelbar vor der Applikation oder während der Applikation zugemischt wird. Die Zumischung erfolgt insbesondere dadurch, dass die Beschleunigerkomponenten **K2** zur Komponente **K1** vor dem Eintritt der Komponente **K1** in einen Statikmischer zugemischt wird. In gewissen Fällen kann es auch von Vorteil sein, dass die Vermischung von Komponente **K1** mit Beschleunigerkomponente **K2** in einem dynamischen Mischer erfolgt.

In beiden Fällen ist es vorzuziehen, dass nach der Mischung die Komponenten **K1** und **K2** quasi-homogen gemischt sind, das heisst, sie sind -abgesehen von kleinen Domänen- völlig homogen gemischt. Eine derartige Vermischung wird insbesondere dann als quasi homogen bezeichnet, wenn -im Falle, dass die zwei Komponenten unterschiedlich gefärbt sind, zum Beispiel schwarz und weiss oder rot und weiss- nach der Mischung eine homogene Mischfarbe ohne Schlieren oder Streifen vorhanden ist.

Der grosse Vorteil der vorliegenden zweikomponentigen Klebstoff- oder Dichtstoffzusammensetzung liegt jedoch vor allem darin, dass aufgrund der Tatsache, dass primär ein Katalysator **C** und nicht ein Isocyanatreaktive Komponente einer Isocyanatkomponte zugemischt wird, eine vollständige Durchmischung nicht nötig ist. Denn einerseits ist der Katalysator **C** ist ein kleines Molekül, welches leicht in die Isocyanat-Komponente **K1** hinein diffundieren kann und andererseits beschleunigt der Katalysator **C** lediglich die Reaktion der Isocyanat-Gruppen, ist aber ansonsten nicht an der Vernetzungsreaktion beteiligt. Sofern die zwei Komponenten zumindest zu einem gewissen Mass gemischt sind, bewirken die nicht völlig eingemischten Bestandteile der Beschleunigerkomponente **K2** keine, oder lediglich eine geringe, Reduktion der Mechanik der ausgehärteten Zusammensetzung. Die kleinsten Mengen an Isocyanat-reaktiven Bestandteilen, welche gegebenenfalls in der Beschleunigerkomponente zu weniger als 1 Gew.-% enthalten sein können, und welche deshalb lediglich als Spuren zu betrachten sind, ändern an diesem Vorteil nichts. Bei einem grösserem Gehalt an derartigen Isocyanat-reaktiven Bestandteilen können jedoch die von den klassischen zweikomponentigen Polyurethansystemen her bekannten Schwächungen der Mechanik in steigendem Masse auftreten. Bei den klassischen zweikomponentigen Polyurethanzusammensetzungen, bei welchen die zweite Komponente im Wesentlichen aus einem Isocyanat-reaktiven Bestandteil, insbesondere einem Polyol und/oder einem Polyamin, besteht, müssen nämlich die NCO-reaktiven Verbindungen mit den Polyisocyanat der Isocyanatkomponente über eine Additionsreaktion miteinander reagieren, während bei der vorliegenden Zusammensetzung die Aushärtung nach der Applikation der Zusammensetzung über die Feuchtigkeit in der Luft erfolgt, die erfindungsgemässe Zusammensetzung ist somit "feuchtigkeitshärtend".

Somit sind bei der Vermischung der erfindungsgemässen Zusammensetzung weniger hohe Ansprüche an die Dosiergenauigkeit und die Mischgüte gestellt als bei klassischen zweikomponentigen Polyurethanen.

Beim Mischen der zwei Komponenten **K1** und **K2** erfolgt in Gegenwart von Feuchtigkeit, insbesondere von Luftfeuchtigkeit, eine Aushärtung der Komponente **K1**. Im Vergleich zu der Aushärtung der Komponente **K1** mit Feuchtigkeit allein, d.h. ohne Anwesenheit der Beschleunigerkomponente **K2,** ist die Aushärtung jedoch schneller. Die Geschwindigkeit der Aushärtung ist unter anderem abhängig von der Menge des beigemischten Katalysators **C,** von der Temperatur des Klebstoffs, des Untergrundes und/oder der Umgebung, sowie der Menge des für die Reaktion notwendigen Wassers, d.h. insbesondere von der relativen Luftfeuchtigkeit. Somit lassen sich durch Variation der Katalysatormenge auf einfache Art und Weise Kleb- und Dichtstoffzusammensetzungen erhalten, welche auf die unterschiedlichen Klimabedingungen, welche zum Beispiel im Sommer und im Winter herrschen, optimal eingestellt sind in Bezug auf Haftung und Aushärtungsgeschwindigkeit.

Bei einer Aushärtung mittels Luftfeuchtigkeit wird zunächst eine Haut an der Oberfläche der Zusammensetzung gebildet. Die sogenannte Hautbildungszeit stellt demnach ein Mass für die Aushärtungsgeschwindigkeit dar. Typischerweise ist eine derartige Hautbildungszeit von bis zu 4 Stunden, vorzugsweise bis zu 2 Stunden, bei 23 ˚C und 50% relative Luftfeuchtigkeit erstrebenswert. Die Zusammensetzung verfügt im ausgehärteten Zustand über eine hohe mechanische Festigkeit bei einer hohen Dehnbarkeit, sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche eine schnelle Aushärtung erfordern und hohe Anforderungen an die Dehnbarkeit stellen, bei gleichzeitig hohen Anforderungen an die Haftungseigenschaften und die Festigkeiten.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln, wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau.

Elastische Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

In einer bevorzugten Ausführungsform wird die beschriebene Zusammensetzung als elastischer Klebstoff oder Dichtstoff eingesetzt.

Als elastischer Klebstoff weist die Zusammensetzung typischerweise eine Bruchdehnung von mindestens 200% und als elastischer Dichtstoff eine solche von mindestens 500% bei Raumtemperatur auf.

Beim Applikationsverfahren werden nach dem Mischen der zwei Komponenten **K1** und **K2** die gemischten Komponenten auf eine Fügeteiloberfläche **S1** appliziert. Die Applikation erfolgt üblicherweise mittels einer Düse in Form einer sogenannten Dreiecks- oder Rundraupe. Die Applikation erfolgt vorzugsweise mittels einer geeigneten Vorrichtung auf das Substrat. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Dichtstoff oder Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Nach dem Applizieren der gemischten Komponenten auf die Fügeteiloberfläche **S1** wird in einem weiteren Schritt die so gemischte und applizierte gemischten Komponenten mit einer zweiten Fügeteiloberfläche **S2** kontaktiert und unter dem Einfluss von Wasser, insbesondere in Form von Luftfeuchtigkeit ausgehärtet.

Beim Abdichten wird die Dichtstoffzusammensetzung typischerweise in einen Spalt eingepresst, so dass in diesem Fall das Applizieren der gemischten Zusammensetzung auf die Fügeteiloberfläche **S1** und das Kontaktieren mit der zweiten Fügeteiloberfläche **S2** simultan erfolgen kann. Somit ist es klar, dass die Schritte (ii) und (iii) im beschriebenen Klebstoff- oder Dichtstoff-Applikationsverfahren, nacheinander oder gleichzeitig erfolgen können.

Die Fügeteiloberflächen **S1** und **S2** können unterschiedlicher Art sein. Sie können gleich oder unterschiedlich voneinander in Gestalt und/oder Material sein.

Geeignete Fügeteiloberflächen **S1** oder **S2** sind beispielsweise Oberflächen von anorganischen Substraten, wie Glas, Glaskeramik, Beton, Mörtel, Backstein, Ziegel, Gips und Natursteine, wie Granit oder Marmor; von Metallen oder Legierungen, wie Aluminium, Stahl, Buntmetalle, verzinkte Metalle; von organischen Substraten, wie Holz, von Kunststoffen, wie PVC, Polycarbonate, PMMA, Polyester, Epoxidharze; von beschichteten Substraten, wie pulverbeschichtete Metalle oder Legierungen; sowie von Farbanstrichen und Lacken, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Es hat sich überraschenderweise gezeigt, dass trotz der Beschleunigung der Aushärtung der Zusammensetzung die Haftung nicht negativ beeinflusst wird. Es hat sich insbesondere gezeigt, dass gleichzeitig schnelle Aushärtung und guter Haftung auf lackierten Untergründen vorhanden ist. Besonders überraschend ist die gute Haftung der ausgehärteten erfindungsgemässen Zusammensetzung auf Lacken, insbesondere auf lackierten Metallen und Legierungen, vorzugsweise auf Automobildecklacken. Eine grosse Anzahl von derartigen Automobildecklacken ist nämlich bekannt dafür, dass sie mit bestehenden zweikomponentigen Polyurethanklebstoffen Schwächen in der Haftung aufweisen.

Deshalb eignet sich die erfindungsgemässe Zusammensetzung insbesondere für das Abdichten und/oder Verkleben von Automobildecklack-Substraten.

Es ist dem Fachmann klar, dass das Kontaktieren mit der zweiten Fügeteiloberfläche innerhalb der sogenannten Offenzeit erfolgen muss, so dass ein Klebverbund mit guter Haftung entstehen kann.

Über ein vorgängig beschriebenes Klebstoff- oder Dichtstoff-Applikationsverfahren wird ein verklebter oder abgedichteter Artikel erhalten. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.

Als besonders bevorzugt ist der verklebte Artikel einerseits eine Scheibe eines Transportmittels, andererseits ein Transportmittel oder ein Anbauteil für ein Transportmittel. Das Transportmittel ist vorzugsweise ein Strassenfahrzeug oder ein Schienenfahrzeug, insbesondere ein Automobil oder ein Bus oder Lastkraftwagen.

Als Scheibe wird insbesondere eine mit Glaskeramik bedruckte Glasscheibe, wie sie beispielsweise als Front-, Seiten- oder Heckscheibe bei Automobilen zum Einsatz kommt, bevorzugt. Beim Verglasen von Fahrzeugen, sowohl bei der Erstverglasung, d.h. bei der Fahrzeugherstellung, als auch bei der Reparaturverglasung, d.h. zum Bespiel beim Ersatz von durch Steinschlag beschädigten Scheiben, ist eine hohe Aushärtungsgeschwindigkeit und eine gute Haftung von wesentlichem Vorteil.

**Beispiele**

Herstellung Klebstoffbasisformulierung

Es wurde ein erstes Prepolymer **P (P1)** wie folgt hergestellt:
590 g Polyol Acclaim® 4200 N (Bayer), 1180 g Polyol Caradol® MD34-02 (Shell) und 230 g Isophorondiisocyanat (IPDI; Vestanat® IPDI, Degussa) wurden nach bekanntem Verfahren bei 80 ˚C zu einem NCO-terminierten Prepolymeren umgesetzt. Das Reaktionsprodukt hatte einen titrimetrisch bestimmten Gehalt an freien Isocyanat-Gruppen von 2.12 Gew.-%.

Es wurde ein zweites Prepolymer **P** (**P2**) wie folgt hergestellt:

1300 g Polyoxypropylen-Diol (Acclaim® 4200 N, Bayer; OH-Zahl 28.5 mg KOH/g), 2600 g Polyoxypropylenpolyoxyethylen-Triol (Caradol® MD34-02, Shell; OH-Zahl 35.0 mg KOH/g), 605 g 4,4'-Methylendiphenyldiisocyanat (MDI; Desmodur® 44 MC L, Bayer) und 500 g Diisodecylphthalat (DIDP; Palatinol® Z, BASF) wurden bei 80 ˚C zu einem NCO-terminierten Polyurethanpolymeren mit einem Gehalt an freien Isocyanat-Gruppen von 2.07 Gewichts-% und einer Viskosität bei 20 ˚C von 48 Pa·s umgesetzt.

Es wurde die folgende Klebstoffbasis als Beispiel für eine Komponente **K1** wie folgt in einer dem Fachmann bekannten Art und Weise hergestellt:

28.4 g Prepolymer **P1** und 139.5 g Prepolymer **P2** wurden mit 73.0 g Diisodecylphthalat (DIDP; Palatinol® Z, BASF) und 47.0 g Russ sowie 71.3 g Calciumcarbonat in einem Vakuummischer unter Feuchtigkeitsausschluss zu einer knollenfreien, homogenen Paste verarbeitet.

Die derart hergestellte Komponente **K1** wurde unverzüglich in feuchtigkeitsdichte Aluminiumkartuschen abgefüllt.

Als Komponente **K2** wurde der in Tabelle 1 angegebene Katalysator in der dort angegebenen Menge mit dem angegebenen Lösungsmittel vermischt.

Die Komponenten **K1** und **K2** wurden jeweils im Verhältnis 360 g **K1** zu 6 g **K2** (60:1) gemischt.

| | Ref.1 | Ref.2 | Ref.3 | Ref.4 | Ref.5 | Ref.6 | 1 | 2 | 3 |
|---|---|---|---|---|---|---|---|---|---|
| **K1** [g] | 360 | 360 | 360 | 360 | 360 | 360 | 360 | 360 | 360 |
| | | | | | | | | | |
| **K2** [g] | | | | | | | | | |
| Diisodecylphthalat (DIDP) [g] | 4.20 | 4.20 | 4.20 | 5.36 | 4.80 | 5.54 | | 5.41 | 3.77 |
| Methylethylketon [g] | | | | | | | 4.86 | | 1.80 |
| Dimorpholinodi-ethylether (DMDEE) [g] | 1.80 | | | | | | | | |
| N-Methyldicyclo-hexylamin [g] | | 1.80 | | | | | | | |
| Dibutylzinndilaurat (DBTL)[g] | | | 0.97 | | | | | | |
| Wismut-Octoat [g] | | | | 0.64 | | | | | |
| Molybdän-2-ethy-hexanoat[g] | | | | | 1.20 | | | | |
| Bis(tri-n-Butylzinn)oxid [g] | | | | | | 0.46 | | | |
| Eisen(III)acetyl-acetonat [g] | | | | | | | 1.14 | | |
| Zinkneodecanoat [g] | | | | | | | | 0.95 | |
| Blei-2-Ethyl-hexanoat [g] | | | | | | | | | 0.43 |
| Summe [g] | 6.00 | 6.00 | 6.00 | 6.00 | 6.00 | 6.00 | 6.00 | 6.00 | 6.00 |
| Konz Metall bzw. Amin in Zusammensetzung [ppm] | 500 | 500 | 500 | 500 | 500 | 500 | 500 | 500 | 500 |

Tabelle 1.    Zusammensetzungen.

| | Ref.7 | Ref.8 | 4 | 5 | 6 | 7 | 8 |
|---|---|---|---|---|---|---|---|
| **K1** [g] | 360 | 360 | 360 | 360 | 360 | 360 | 360 |
| | | | | | | | |
| **K2** [g] | | | | | | | |
| Diisodecylphthalat (DIDP) [g] | 5.11 | | | 4.10 | 3.71 | 2.73 | 2.37 |
| Methylethylketon [g] | | | 4.70 | | | 1.36 | 1.18 |
| Dibutylzinndilaurat (DBTL)[g] | 0.89 | | | | | | |
| Eisen(III)acetyl-acetonat [g] | | | 1.30 | | | | |
| Zinkneodecanoat [g] | | | | 1.90 | 2.29 | | |
| Blei-2-Ethyl-hexanoat [g] | | | | | | 1.91 | 2.45 |
| Summe [g] | 6.00 | | 6.00 | 6.00 | 6.00 | 6.00 | 6.00 |
| Konz Metall bzw. Amin in Zusammensetzung [ppm] | 460 | 0 | 568 | 1000 | 1207 | 2221 | 2846 |

Tabelle 1.    Zusammensetzungen (Fortsetzung)

Resultate

Die Zusammensetzungen wurden als Rundraupe sofort nach dem Mischen auf Floatglas (Rocholl, Schönbrunn, Deutschland) ("*Glas*") sowie auf die folgenden Lackbleche appliziert:

  "*RK8046*": Clear Coat DuPont RK8046, Farbe silber, (ACT Laboratories
  "*RK8046*": Clear Coat DuPont RK8013, Farbe silber, (ACT Laboratories)
  "*FF98-0001*": Decklack BASF FF98-0001 (BASF Coatings AG)

Das Glas wurde vor dem Applizieren des gemischten Klebstoffs mit Isopropanol oder mit Sika® Aktivator, kommerziell erhältlich von Sika Schweiz AG, vorbehandelt und während 10 Minuten abgelüftet.

Die Lackbleche wurden unvorbehandelt oder durch Abwischen mit Heptan vorbehandelt und während 10 Minuten abgelüftet.

Nach dem Auftrag des gemischten Klebstoffs wurde die Haftung nach einer Lagerung während 7 Tagen bei 23°C/50% rel. Luftfeuchtigkeit wie folgt getestet:

Zur Prüfung der Haftung wurde die ausgehärtete Raupe jeweils an einem Ende knapp über der Oberfläche des Plättchens (Klebefläche) eingeschnitten. Das eingeschnittene Ende der Raupe wurde von Hand festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Plättchen gezogen bzw. geschnitten. Die Bewertung der Hafteigenschaften erfolgte anhand dem nach dem Abziehen der Raupe auf der Substratoberfläche zurückbleibenden ausgehärteten Dicht- oder Klebstoff (Kohäsionsbruch), und zwar durch Abschätzen des kohäsiven Anteils der Haftfläche, gemäss folgender Skala:

1 = mehr als 95% Kohäsionsbruch
2 = 75 - 95% Kohäsionsbruch
3 = 25 - 75% Kohäsionsbruch
4 = weniger als 25% Kohäsionsbruch
5 = 0% Kohäsionsbruch (rein adhäsiver Bruch)

Testresultate mit Kohäsionsbruchwerten von weniger als 75%, also Werte von 3 und 4 und 5, gelten als ungenügend.

Tabelle 2. Haftung der Zusammensetzungen auf unterschiedlichen Oberflächen **S1**.*VB=Vorbehandlung

|                     | *Ref.1* | *Ref.2* | *Ref.3* | *Ref.4* | *Ref.5* | *Ref.6* | *1* | *2* | *3* |
|---------------------|------|------|------|------|------|------|---|---|---|
| *Glas*              |      |      |      |      |      |      |   |   |   |
| VB*:Sika® Aktivator | 1    | 1    | 1    | 1    | 1    | 1    | 1 | 1 | 1 |
| VB*:Isopropanol     | 5    | 5    | 5    | 5    | 5    | 5    | 5 | 5 | 5 |
|                     |      |      |      |      |      |      |   |   |   |
| *RK8046*            |      |      |      |      |      |      |   |   |   |
| VB*:Heptan          | 5    | 5    | 2    | 3    | 3    | 5    | 1 | 1 | 1 |
| VB*:keine           | 5    | 5    | 2    | 5    | 3    | 5    | 1 | 4 | 1 |
|                     |      |      |      |      |      |      |   |   |   |
| *RK8013*            |      |      |      |      |      |      |   |   |   |
| VB*:Heptan          | 5    | 3    | 2    | 4    | 5    | 5    | 1 | 2 | 1 |
| VB*:keine           | 5    | 5    | 3    | 5    | 5    | 5    | 2 | 5 | 2 |
|                     |      |      |      |      |      |      |   |   |   |
| *FF98-0001*         |      |      |      |      |      |      |   |   |   |
| VB*:Heptan          | 5    | 5    | 4    | 2    | 3    | 4    | 1 | 2 | 1 |
| VB*:keine           | 5    | 5    | 4    | 3    | 3    | 4    | 1 | 4 | 2 |

Hautbildungszeiten

Als Mass für die Aushärtungsgeschwindigkeit wurde die Hautbildungszeit bestimmt.

Hierfür wurde eine dünne Schicht (2mm) der zu Zusammensetzung unmittelbar nach dem Mischen der Komponenten **K1** und **K2** auf einen Karton aufgetragen und bei 23°C / 50% rel. Luftfeuchtigkeit gelagert. Die Oberflächenbeschaffenheit der Probe wurde überprüft indem man mit dem hinteren Teil einer Einwegpipette aus Polyethylen die Probe berührte. Als Hautbildungszeit ($t_{HB}$) wird diejenige Zeit ab dem Mischen bis zu dem Moment, wo die Berührung der Pipette keinen Faden mehr aus der Zusammensetzung reisst, angegeben.

Tabelle 3. Hautbildungszeit $t_{HB}$ der Zusammensetzungen.

| | Ref.3 | Ref.7 | Ref.8 | 1 | 2 | 3 | 4 | 5 | 6 | 7 | 8 |
|---|---|---|---|---|---|---|---|---|---|---|---|
| $t_{HB}$ [min] | 20 | 35 | >>240 | 45 | 224 | 223 | 75 | 120 | 190 | 89 | 90 |
| Metall | Sn | Sn | - | Fe | Zn | Pb | Fe | Zn | Zn | Pb | Pb |
| Konz. [ppm] | 500 | 460 | - | 500 | 500 | 500 | 568 | 1000 | 1207 | 2221 | 2846 |

Aus den Ergebnissen der Tabelle 3 ist ersichtlich, dass die Zusammensetzungen *1* bis *8* beschleunigt aushärten. Allerdings ist auch ersichtlich, dass die Katalysatoren **C** im Vergleich zu Dibutylzinndilaurat weniger stark beschleunigend wirken.

Lagerversuche von einkomponentigen Zusammensetzungen

Es wurde die in den vorhergehenden Beispielen verwendete Komponente **K1** dahin gehend modifiziert, dass bei deren Herstellung am Schluss noch die in Tabelle 3 angegebene Menge an Katalysator eingemischt wurde und unter Ausschluss von Feuchtigkeit in verschlossenen Aluminiumkartuschen gelagert wurde. Nach der Lagerung dieser verschlossenen Kartuschen nach 2 Tagen bei Raumtemperatur ("*APK1*"), beziehungsweise 7 Tagen bei 60°C ("*APK2*"), beziehungsweise 2 Tagen bei 70°C ("*APK3*"), wurde die Auspresskraft (APK) wie folgt ermittelt:

Für die Bestimmung der Auspresskraft wurde eine mit Klebstoff gefüllte Kartusche nach Konditionierung während 12 Stunden bei 23°C geöffnet und eine Düse von 5 mm aufgeschraubt. Und mit einem Auspressgerät "Zwick 1120" die Kraft bestimmt, um den Klebstoff mit einer Auspressgeschwindigkeit von 60 mm/min auszupressen. Der angegebene Wert ist ein Mittelwert nach 140 ml Auspressung.

Tabelle 4. Lagerstabilität von Katalysator enthaltenden einkomponentigen Zusammensetzungen.

| | | Auspresskraft | | *APK1* | *APK2* | | *APK3* | |
|---|---|---|---|---|---|---|---|---|
| | | | | 2d/23°C | 7d/60°C | | 2d/70°C | |
| | Katalysator | Menge [ppm] | | *APK1* [N] | *APK2* [N] | $\dfrac{APK2}{APK1}$ | *APK3* [N] | $\dfrac{APK3}{APK1}$ |
| *Ref.9* | Dibutylzinndilaurat (DBTL) | 460 | | 490 | 690 | +41% | 733 | +50% |
| *Ref.10* | Eisen(III)acetyl-acetonat | 568 | | 360 | 532 | +48% | 587 | +63% |
| *Ref.11* | Zinkneodecanoat | 1207 | | 535 | nicht messbar | | nicht messbar | |
| *Ref.12* | Blei-2-Ethyl-hexanoat | 2846 | | 572 | nicht messbar | | nicht messbar | |

Die Ergebnisse aus Tabelle 4 zeigen, dass die Katalysatoren **C** in einer einkomponentigen Zusammensetzung dazu führen, dass die Zusammensetzungen im Vergleich zu den Standartkatalysatoren (*Ref. 9*) nicht lagerstabil sind.

Herstellung von Verklebungen

Es wurden die folgenden Klebverbunde, indem die gemischten Zusammensetzungen der Beispiele *1*, *2* und *3* auf den Glasbereich, bzw. auf den mit Keramik beschichteten Randbereich (beide mit Sika® Aktivator, Sika Schweiz AG, vorbehandelt) einer Automobil-Frontscheibe (Originalscheibe eines Ford Fiesta) als Dreieckraupe appliziert, auf die dann die lackierten Automobildecklack-Blechen Blechen *RK8046, RK8013* und *FF98-0001* (gereinigt mit Heptan) gedrückt (kontaktiert) wurden. Nach 7 Tagen Aushärtung wurde die Haftung begutachtet. Alle Probekörper wiesen eine einwandfreie Haftung auf. Bei der Abschälung des Bleches mittels Rundzange konnte bei allen Proben, d.h. sowohl auf Glas als auch Glaskeramik, ein kohäsiver Bruch im Klebstoff festgestellt werden.

**Patentansprüche**

1. Zweikomponentige Klebstoff- oder Dichtstoffzusammensetzung bestehend aus
   einer ersten Komponente **K1,**
   welche mindestens ein Isocyanat-Gruppen aufweisendes Prepolymer **P,** welches aus mindestens einem Polyisocyanat und mindestens einem Polyol hergestellt wird, umfasst;
   und einer Beschleunigerkomponente **K2,**
   welche einen Gehalt von Isocyanat-reaktive Gruppen aufweisenden Verbindungen von weniger als 1 Gew.-%, bezogen auf die Beschleunigerkomponente, aufweist;
   und die im Weiteren mindestens einen Katalysator **C**, welcher die Reaktion von Isocyanat-Gruppen katalysiert, und welcher ein Bleikomplex oder ein Zinkkomplex oder ein Eisen(III)komplex ist, enthält.

2. Zweikomponentige Klebstoff- oder Dichtstoffzusammensetzung gemäss Anspruch 1, **dadurch gekennzeichnet, dass** die erste Komponente **K1** einen Füllstoff, insbesondere einen Russ, umfasst, bevorzugt in einer Menge von 5 - 35 Gew.-%, bezogen auf das Gewicht der ersten Komponente **K1**.

3. Zweikomponentige Klebstoff- oder Dichtstoffzusammensetzung gemäss Anspruch 1 oder 2, **dadurch gekennzeichnet, dass** die Beschleunigerkomponente **K2** ein Thixotropiermittel auf Harnstoffbasis in einem Trägermittel, umfasst.

4. Zweikomponentige Klebstoff- oder Dichtstoffzusammensetzung gemäss Anspruch 3, **dadurch gekennzeichnet, dass** das Trägermittel ein blockiertes Polyurethanprepolymer ist.

5. Zweikomponentige Klebstoff- oder Dichtstoffzusammensetzung gemäss einem der vorhergehenden Ansprüche, **dadurch gekennzeichnet, dass** der Katalysator **C** in einer Menge von 0.01 - 0.3 Gew.-%, insbesondere 0.04 - 0.1 Gew.-%, an Metall, bezogen auf das Gewicht der Klebstoff- oder Dichtstoffzusammensetzung, vorhanden ist.

6. Zweikomponentige Klebstoff oder Dichtstoffzusammensetzung gemäss einem der vorhergehenden Ansprüche, **dadurch gekennzeichnet, dass** das Volumenverhältnis der ersten Komponente **K1** zur Beschleunigerkomponente **K2** einen Wert von 100 : 1 bis 1 : 1, insbesondere 100 : 1 bis 10 : 1, bevorzugt 100 : 1 bis 20:1, beträgt.

7. Zweikomponentige Klebstoff- oder Dichtstoffzusammensetzung gemäss einem der vorhergehenden Ansprüche, **dadurch gekennzeichnet, dass** der Komplex **C** ein Bleikomplex ist und der Bleikomplex mindestens einen über Sauerstoff-Atome an das Bleiatom gebundene organische Liganden enthält, und welcher insbesondere ein Bleikomplex von organischen Carboxylaten, insbesondere von Fettsäurecarboxylaten oder Naphthenaten, ist.

8. Zweikomponentige Klebstoff- oder Dichtstoffzusammensetzung gemäss einem der Ansprüche 1 bis 6, **dadurch gekennzeichnet, dass** der Komplex **C** ein Zinkkomplex ist und der Zinkkomplex mindestens einen über Sauerstoff-Atome an das Zinkatom gebundene organische Liganden enthält, und welcher insbesondere ein Zinkkomplex von organischen Carboxylaten, insbesondere von Fettsäurecarboxylaten oder Naphthenaten, ist.

9. Zweikomponentige Klebstoff- oder Dichtstoffzusammensetzung gemäss einem der Ansprüche 1 bis 6, **dadurch gekennzeichnet, dass** der Komplex **C** ein Eisen(III)komplex ist und der Eisen(III)komplex mindestens einen über Sauerstoff-Atome an das Eisen(III)atom gebundene organische Liganden enthält, und welcher insbesondere ein Eisen(III)komplex von organischen Carboxylaten, insbesondere von Fettsäurecarboxylaten oder Naphthenaten, oder von Acetylacetonat ist.

10. Verfahren zur Mischung einer zweikomponentigen Klebstoff- oder Dichtstoffzusammensetzung gemäss einer der Ansprüche 1 bis 9, **dadurch gekennzeichnet, dass** die Beschleunigerkomponente **K2** der Komponente **K1** unmittelbar vor der Applikation oder während der Applikation zugemischt wird.

11. Verfahren gemäss Anspruch 10, **dadurch gekennzeichnet, dass** die Zumischung der Beschleunigerkomponenten **K2** zur Komponente **K1** vor dem Eintritt der Komponente **K1** in einen Statikmischer erfolgt.

12. Verfahren gemäss Anspruch 10, **dadurch gekennzeichnet, dass** die Vermischung von Komponente **K1** mit Beschleunigerkomponente **K2** in einem dynamischen Mischer erfolgt.

13. Klebstoff oder Dichtstoff-Applikationsverfahren, **dadurch gekennzeichnet, dass** es die folgenden Schritte umfasst

(i) Mischen der zwei Komponenten **K1** und **K2** einer Klebstoff- oder Dichtstoffzusammensetzung gemäss einem der Ansprüche 1 bis 9;

(ii) Applizieren der nach Schritt (i) gemischten Komponenten auf eine Fügeteiloberfläche **S1;**

(iii) Kontaktieren der nach Schritt (i) gemischten Komponenten mit einer zweiten Fügeteiloberfläche **S2;**

(iv) Aushärten der gemischten Komponenten unter dem Einfluss von Wasser, insbesondere in Form von Luftfeuchtigkeit.

14. Klebstoff- oder Dichtstoff-Applikationsverfahren gemäss Anspruch 13, **dadurch gekennzeichnet, dass** mindestens eine der Fügeteiloberfläche **S1** oder **S2** eine Lackoberfläche, insbesondere die Oberfläche eines Automobildecklackes, ist.

15. Verklebter Artikel, der gemäss einem Klebstoff- oder Dichtstoff-Applikationsverfahren gemäss Anspruch 13 oder 14 verklebt worden ist.

16. Verklebter Artikel gemäss Anspruch 15, **dadurch gekennzeichnet, dass** der Artikel eine Scheibe eines Transportmittels ist.

17. Verklebter Artikel gemäss Anspruch 15, **dadurch gekennzeichnet, dass** der Artikel ein Transportmittel oder ein Anbauteil für ein Transportmittel ist.

18. Verklebter Artikel gemäss Anspruch 17, **dadurch gekennzeichnet, dass** das Transportmittel ein Strassenfahrzeug oder ein Schienenfahrzeug, insbesondere ein Automobil oder ein Bus oder Lastkraftwagen ist.

**EP 1 860 131 A1**

**Europäisches Patentamt**

**EUROPÄISCHER RECHERCHENBERICHT**

Nummer der Anmeldung

EP 06 11 4497

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 62 285971 A (YOKOHAMA RUBBER CO LTD) 11. Dezember 1987 (1987-12-11) * das ganze Dokument * ----- | 1,7,10 | INV. C08G18/10 C08G18/22 C09J175/04 |
| A | JP 2004 182997 A (SUNSTAR ENGINEERING INC) 2. Juli 2004 (2004-07-02) ----- | 1 | |
| A | JP 2002 188072 A (SANYO CHEMICAL IND LTD) 5. Juli 2002 (2002-07-05) ----- | 1 | |
| A | DE 102 60 299 A (BAYER) 1. Juli 2004 (2004-07-01) * Absatz [0012] - Absatz [0025]; Ansprüche 1,5,7; Beispiel 1 * ----- | 1 | |
| D,A | EP 1 152 019 A (SIKA) 7. November 2001 (2001-11-07) * Absatz [0006] - Absatz [0021]; Ansprüche 1-20 * ----- | 1,3 | |

**RECHERCHIERTE SACHGEBIETE (IPC)**

C08G
C09J

Der vorliegende Recherchenbericht wurde für alle Patentansprüche erstellt

| Recherchenort | Abschlußdatum der Recherche | Prüfer |
|---|---|---|
| Den Haag | 25. Oktober 2006 | Bourgonje, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes Dokument

EPO FORM 1503 03.82 (P04C03)

**EP 1 860 131 A1**

**ANHANG ZUM EUROPÄISCHEN RECHERCHENBERICHT**
**ÜBER DIE EUROPÄISCHE PATENTANMELDUNG NR.**                    EP 06 11 4497

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2006

| Im Recherchenbericht angeführtes Patentdokument | Datum der Veröffentlichung | Mitglied(er) der Patentfamilie | Datum der Veröffentlichung |
|---|---|---|---|
| JP 62285971 A | 11-12-1987 | KEINE | |
| JP 2004182997 A | 02-07-2004 | KEINE | |
| JP 2002188072 A | 05-07-2002 | KEINE | |
| DE 10260299 A | 01-07-2004 | AU 2003294804 A1<br>BR 0317494 A<br>CA 2510560 A1<br>CN 1729224 A<br>WO 2004058849 A1<br>EP 1578836 A1<br>MX PA05006529 A<br>US 2004147704 A1 | 22-07-2004<br>16-11-2005<br>15-07-2004<br>01-02-2006<br>15-07-2004<br>28-09-2005<br>26-08-2005<br>29-07-2004 |
| EP 1152019 A | 07-11-2001 | CA 2345874 A1<br>JP 2002012850 A<br>US 2002007003 A1 | 02-11-2001<br>15-01-2002<br>17-01-2002 |

EPO FORM P0461

Für nähere Einzelheiten zu diesem Anhang : siehe Amtsblatt des Europäischen Patentamts, Nr.12/82

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0737699 B
- EP 1152019 A1
- WO 2004013088 A